# FASCICULE DE BREVET EUROPEEN

(11) **EP 0 381 561 B1**
(45) Date de publication et mention de la délivrance du brevet: **03.11.1993**
(21) Numéro de dépôt: 90400222.7
(22) Date de dépôt: 25.01.1990
(51) Int. Cl.: F16K 1/22, B23P 19/04, F02M 19/00

(54) **Procédé de montage de papillon d'étranglement sur un axe fendu**
Verfahren zum Montieren einer Drosselklappe auf einer geschlitzten Achse
Method for mounting a butterfly choke valve on a split spindle

(30) Priorité: 31.01.1989 FR 8901186
(43) Date de publication de la demande: 08.08.1990
(73) Titulaire: SOLEX, F-92002 Nanterre Cédex (FR)
(72) Inventeur: Bongart, Marcel, F-27930 Aviron (FR)
(74) Mandataire: Fort, Jacques

(56) Documents cités:
- GB-A- 749 314
- US-A- 1 841 695
- US-A- 2 105 343

## Description

L'invention concerne le montage d'un papillon d'étranglement sur un axe rotatif traversant un conduit et dans lequel est ménagée une fente de réception du papillon voir par exemple le document US-A-1 841 695. Elle trouve une application particulièrement importante, bien que non exclusive, dans le montage des papillons constituant organe d'étranglement dans les dispositifs d'alimentation en combustible pour moteurs à combustion interne.

Les conduits d'admission de tels moteurs comportent en règle générale un papillon commandé par le conducteur et permettant de régler le débit de mélange air/combustible fourni au moteur. Beaucoup de carburateurs comportent également un second papillon d'étranglement, constituant un volet de départ, placé dans l'entrée d'air du carburateur et ayant pour fonction d'enrichir le mélange fourni au moteur lors du départ à froid.

Quelquefois, le papillon est fixé par des vis sur un méplat prévu sur l'axe. Beaucoup plus souvent, le papillon est placé dans une fente traversant l'axe, et il est maintenu en place par des vis traversant l'axe et le papillon.

Le montage du papillon semble à première vue une opération simple. Dans la réalité, il est délicat, notamment du fait que le jeu entre le papillon et les parois de la fente doit être très faible (quelques centièmes de mm) pour éviter les fuites d'air par ce jeu. Pour introduire le papillon, il faut d'abord orienter l'axe de façon que la fente soit parallèle à l'axe du conduit, puis insérer le papillon sur la hauteur requise et enfin faire tourner l'ensemble axe-papillon, en évitant que ce dernier ne glisse dans la fente, jusqu'à la position de fermeture dans laquelle est effectuée la mise en place des vis de fixation. L'insertion du papillon dans la position correcte, puis son maintien pendant la rotation de l'axe ont requis, jusqu'à ce jour, une mise en place manuelle.

L'invention vise à fournir un procédé de montage du papillon par mise en oeuvre d'un robot, sans intervention manuelle.

Pour cela, l'invention propose notamment un procédé de montage suivant lequel, après avoir orienté l'axe de façon que la fente soit parallèle à l'axe du conduit :
- on saisit le papillon par un bord à l'aide d'un organe de préhension et on déplace l'organe de préhension suivant un trajet d'insertion radiale du papillon dans la fente jusqu'à sa position définitive par rapport à l'axe, et
- on fait tourner l'ensemble constitué par le papillon et par l'axe vers la position d'obturation du conduit par le papillon, en commandant simultanément un moteur d'entraînement de l'axe et une force d'appui simple exercée par l'organe de préhension sur ledit bord de façon à créer des forces de frottement empêchant le glissement du papillon dans la fente de l'axe au cours de la rotation de l'axe jusqu'à la position de fermeture du papillon. Ce dernier reste alors dans la position où il a été placé.

Dans la pratique, on est généralement amené à commander l'organe de préhension de façon qu'il exerce sur le papillon une force dirigée de façon à repousser le papillon vers sa position de fermeture et à commander le moteur de façon qu'il exerce un couple résistant : en effet, l'inertie des moyens d'entraînement de l'organe de préhension du robot, rend plus avantageuse cette façon de procéder. Le moteur (d'inertie faible) est mieux adapté à exercer un couple résistant cédant sous l'action de l'effort exercé par l'organe de préhension.

Dans un mode avantageux de réalisation de l'invention, la venue du papillon dans la position pour laquelle la fente est parallèle à l'axe du conduit est commandée ou vérifiée avant insertion. Cette opération peut s'effectuer par rotation de l'axe jusqu'à ce que le flux lumineux reçu par un récepteur aligné avec une source de lumière le long de la direction d'insertion soit maximum.

L'invention sera mieux comprise à la lecture de la description qui suit d'un mode particulier de la mise en oeuvre de l'invention, donné à titre d'exemple non limitatif. La description se réfère aux dessins qui l'accompagnent, dans lesquels :
- la figure 1 montre un corps de papillon, en coupe suivant un plan passant par l'axe du conduit qui y est ménagé, et le trajet suivi par le papillon lors de son insertion et de la rotation de l'axe jusqu'à la position de fermeture ;
- la figure 2 montre schématiquement, en coupe partielle suivant la ligne II de la figure 1, le corps de papillon et les moyens permettant d'orienter et d'exercer un couple résistant sur l'axe ;
- la figure 3 est un schéma de principe d'un circuit de commande de l'élément de préhension du papillon et des moyens destinés à exercer un couple sur l'axe du papillon ;
- la figure 4, similaire à la figure 1, est un schéma montrant une étape préliminaire d'orientation de l'axe avant insertion du papillon.

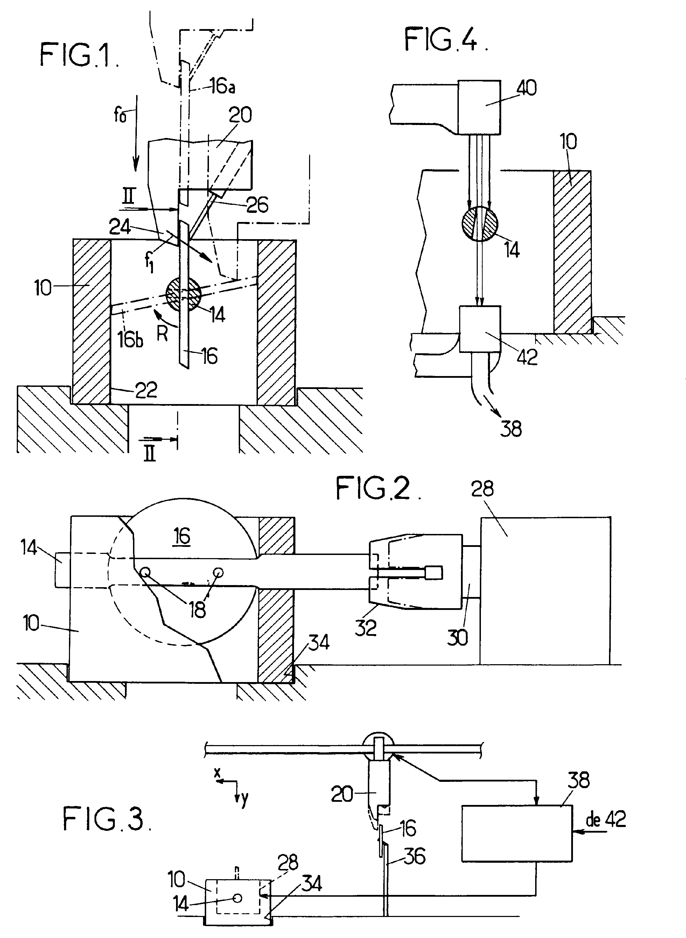

Le corps de papillon montré en figure 1 a une conception générale classique. Il comporte un boîtier 10 de forme tubulaire, généralement ovale. Dans le corps est monté un axe rotatif 14 dans lequel est pratiquée une fente radiale destinée à recevoir un papillon 16 en forme de disque. Des trous 18 sont prévus pour recevoir des vis de fixation du papillon.

Un tel corps de papillon est notamment utilisable dans un carburateur où il est généralement fixé en aval d'un corps d'alimentation en combustible. Il est également utilisable dans un dispositif d'alimentation à injection, où il est intercalé sur la tubulure.

On décrira maintenant les opérations successives qui interviennent au cours du montage du papillon, mettant en oeuvre un robot ayant un organe de préhension 20 porté par des moyens (non représentés) qui peuvent être classiques, permettant de déplacer l'organe 20 dans deux directions orthogonales x et y (figure 3). On supposera dans ce qui suit que la direction y est parallèle à l'axe du conduit 22 ménagé dans le corps et que la direction x est orthogonale à y, les deux directions définissant un plan perpendiculaire à l'axe 14.

L'élément de préhension 20 doit avoir une forme telle qu'il puisse provoquer les mouvements nécessaires du papillon sans être gêné par le corps 10. Dans ce but, l'organe 20 représenté schématiquement sur les figures 1 et 3 se présente comme un doigt allongé dans la direction y, présentant un prolongement 24 destiné à venir en contact avec une face du papillon 16, sur le bord arrière dans le sens de l'engagement du papillon dans l'axe. Des moyens doivent être prévus pour maintenir le papillon serré contre le prolongement 24. Dans le cas illustré sur la figure 1, ils sont constitués par une tige 26, déplaçable entre une position déployée, où elle applique le papillon contre le prolongement 24, et une position rétractée où elle libère le papillon. La tige 26 peut être commandée par des moyens à pression de fluide ou électro-magnétique. Elle constitue, avec le prolongement 24, une pince de serrage du bord du papillon.

Comme on l'a indiqué plus haut, la mise en oeuvre du procédé exige un moteur permettant d'exercer un couple sur l'axe 14. Dans le mode de réalisation montré en figure 2, ce moteur 28 est monté sur un socle où est pratiqué un logement 34 de centrage du corps 10. Le moteur comporte un arbre rotatif 30 muni d'un mandrin 32 déplaçable, par des moyens non représentés, entre une position avant où il emprisonne l'extrémité de l'axe 14, lorsque le corps est placé dans le logement, et une position rétractée (en traits mixtes) où il libère cet axe.

Avant mise en place d'un papillon, le corps 10 est placé, éventuellement par un robot, dans le logement 34, l'axe 14 étant orienté de façon que la fente soit parallèle à l'axe du conduit 22. Le papillon 16 à insérer est placé sur un support 36 prévu pour laisser libre le bord supérieur du papillon. La mise en place s'effectue alors comme suit. Par déplacement suivant les directions x et y, l'élément de préhension 20 est amené à la position représentée en tirets sur la figure 3, où la partie terminale du prolongement 24 est contre le bord supérieur du papillon, la tige 26 étant rétractée. Les moyens de commande de la tige 26 sont actionnés et cette dernière vient plaquer le bord supérieur du papillon contre le prolongement 24.

L'organe 20 est alors déplacé de façon à dégager le papillon 16 de son support puis à l'amener juste au-dessus de la fente de l'axe 14, dans la position illustrée en traits mixtes et désignée par 16a sur la figure 1. L'organe de préhension 20 est descendu, suivant le trajet indiqué par la flèche f₀, pour insérer le papillon sur la hauteur convenable. Les déplacements de l'organe peuvent être commandés par un automate programmable 38, les déplacements ayant été prévus une fois pour toutes en fonction de la position relative du support 36 et du logement 34 sur le socle.

Au cours de cette insertion, le moteur 28 est avantageusement commandé de façon à immobiliser en rotation l'axe 14 dans l'orientation convenable.

Une fois le papillon dans la position montrée en traits pleins sur la figure 1, le moteur 28 est alimenté de façon à exercer un couple tendant à faire tourner l'axe 14 dans le sens opposé à la direction R (figure 1) de fermeture du papillon. Le rôle de ce couple est d'exercer une force de coincement du papillon 16 dans la fente.

Une fois ce coincement obtenu, la tige 26 est rétractée et l'organe de préhension 20 est déplacé dans la direction de la flèche f₁ de façon à repousser, par simple appui, le papillon jusqu'à proximité de sa position de fermeture désignée par 16b (figure 1). La force exercée par l'organe de préhension doit être jusque là suffisante pour vaincre le couple résistant exercé par le moteur 28. Le frottement dû au coincement du papillon 16 dans la fente évite tout glissement du papillon. Lorsque ce dernier est arrivé à proximité de la position de fermeture, l'excitation du moteur 28 est inversée et l'axe 14 entraîne le papillon jusqu'à la position de fermeture où il est automatiquement centré. Le couple exercé par le moteur étant faible, il n'y a aucun risque de déformation.

Il est alors possible d'enlever l'organe de préhension et d'introduire, à sa place, un tournevis d'insertion et de blocage des vis de verrouillage définitif. Le mandrin 32 est reculé et libère l'axe. Le corps, contenant son papillon, peut être retiré, éventuellement à l'aide du robot qui a servi à l'amener, et transféré au poste suivant d'une chaîne de montage de carburateurs ou de dispositifs d'injection.

La venue du papillon 16b en appui contre le corps peut être détectée de diverses façons notamment par mesure de la force exercée sur l'élément de préhension 20 : la venue du papillon en appui se traduit par une augmentation de la force transmise au papillon sans déplacement corrélatif de ce dernier. L'organe de préhension 20 est avantageusement monté pour présenter un certain degré de compliance qui favorise une insertion correcte.

Le procédé comporte avantageusement une étape préliminaire d'orientation de l'axe 14 pour amener la fente dans la direction d'insertion du papillon. On peut pour cela utiliser un appareil de mesure du genre montré schématiquement sur la figure 4. Cet appareil comprend une source de lumière 40 fournissant un faisceau parallèle et un récepteur 42 alignés suivant l'axe du conduit 22. Au cours d'une phase préliminaire, mais alors que le mandrin 32 a déjà été couplé à l'axe 14, on amène la source 40 et le récepteur 42 dans la position de mesure montrée en figure 4. La source est prévue pour fournir un faisceau de lumière parallèle de dimension transversale inférieure au diamètre de l'axe 14. A l'aide de l'automate 38, on commande le moteur 28 de façon à faire osciller l'axe 14 jusqu'à ce que le récepteur 42 reçoive un flux de lumière maximum.

Un appareil du genre montré en figure 4 permet de plus, si cela est nécessaire, de déterminer la position exacte de la fente suivant la direction x, en faisant osciller l'appareil de mesure suivant cet axe et en calculant le milieu de la zone d'éclairement sensiblement constant. Cette position peut être mémorisée par l'automate 38 qui commande en conséquence le déplacement de l'organe de préhension 20 selon la direction x.

L'invention est susceptible de nombreuses variantes de réalisation portant aussi bien sur la séquence d'opérations à effectuer que sur la nature des moyens mis en oeuvre. Par exemple, l'organe de préhension peut comporter, dans la zone du prolongement 24 qui doit s'appliquer contre le papillon, des évidements reliés à volonté à une source de vide pour constituer ventouse.

## Revendications

1. Procédé de montage d'un papillon d'étranglement (16) sur un axe (14) traversant un conduit (10) et dans lequel est ménagée une fente de réception du papillon (16), caractérisé en ce que,après avoir orienté l'axe (14) de façon que la fente soit parallèle à l'axe du conduit (10):
- on saisit le papillon (16) par un bord à l'aide d'un organe de préhension (20) et on déplace l'organe de préhension (20) suivant un trajet d'insertion radial du papillon (16) dans la fente jusqu'à sa position définitive par rapport à l'axe (14), et
- on fait tourner l'ensemble constitué par le papillon (16) et par l'axe (14) vers la position d'obturation du conduit par le papillon, en commandant simultanément un moteur d'entraînement de l'axe et une force d'appui simple exercée par l'organe de préhension (20) sur ledit bord de façon à créer des forces de frottement empêchant le glissement du papillon (16) dans la fente de l'axe (14) au cours de la rotation de l'axe (14) jusqu'à la position de fermeture du papillon (16).

2. Procédé selon la revendication 1, caractérisé en ce qu'on exerce une force de poussée a l'aide de l'organe de préhension et un couple résistant à l'aide du moteur (28).

3. Procédé selon la revendication 1, caractérisé en ce que l'on saisit le papillon par pincement entre un prolongement (24) de l'organe de préhension (20) et des moyens (26) rétractables.

4. Procédé selon la revendication 1, 2 ou 3, caractérisé en ce qu'on saisit le papillon à l'aide de l'organe de préhension (20) par dépression.

5. Procédé selon une quelconque des revendications précédentes, caractérisé en ce qu'on oriente la fente dans un plan passant par l'axe du conduit au cours d'une étape préliminaire.

6. Procédé selon la revendication 5, caractérisé en ce qu'on oriente l'axe (14) par rotation jusqu'à ce que le flux lumineux, transmis à travers la fente,d'une source de lumière (40) vers un récepteur (42) aligné avec la source suivant l'axe du conduit, soit maximum.

## Patentansprüche

1. Verfahren zum Montieren einer Drosselklappe (16) an einer Achse (14), die eine Leitung (10) durchquert und in der ein Schlitz zur Aufnahme der Drosselklappe (16) ausgebildet ist,
dadurch **gekennzeichnet**,
daß man nach dem Ausrichten der Achse (14) in der Weise, daß der Schlitz zur Achse der Leitung (10) parallel ist,
- die Drosselklappe (16) am Rand mittels eines Greiforgans (20) ergreift und das Greiforgan (20) längs eines radialen Einsetzwegs der Drosselklappe (16) in den Schlitz bis in deren endgültige Position gegenüber der Achse (14) verschiebt, und
- die durch die Drosselklappe (16) und die Achse (14) gebildete Anordnung in die Schließstellung der Droselklappe gedreht unter gleichzeitiger Steuerung eines Antriebsmotors für die Achse und einer einfachen Anlagekraft, die durch das Greiforgan (20) auf den Rand ausgeübt wird, zur Erzeugung von Reibungskräften, die das Gleiten der Drosselklappe (16) im Schlitz der Achse (14) während der Drehung der Achse (14) bis in die Schließstellung der Drossel klappe (16) verhindert.

2. Verfahren nach Anspruch 1,
dadurch gekennzeichnet,
daß man mittels des Greiforgans eine Schubkraft und mittels des Motors (28) ein Widerstandsmoment ausübt.

3. Verfahren nach Anspruch 1,
dadurch gekennzeichnet,
daß man die Drosselklappe durch Klemmen zwischen einem Fortsatz (24) des Greiforgans (20) und einer zurückziehbaren Einrichtung (26) ergreift.

4. Verfahren nach Anspruch 1, 2 oder 3,
dadurch gekennzeichnet,
daß man die Drosselklappe mittels des mit Unterdruck arbeitenden Greiforgans (20) ergreift.

5. Verfahren nach einem der vorhergehenden Ansprüche,
dadurch gekennzeichnet,
daß man während eines vorausgehenden Schritts den Schlitz in einer durch die Achse der Leitung hindurchgehenden Ebene ausrichtet.

6. Verfahren nach Anspruch 5,
dadurch gekennzeichnet,
daß man die Achse (14) durch Drehen ausrichtet, bis der durch den Schlitz übertragene Lichtstrom einer Lichtquelle (40) in Richtung auf einen mit der Lichtquelle längs der Achse der Leitung fluchtenden Empfänger (42) ein Maximum ist.

## Claims

1. Method of fitting a butterfly valve (16) on a shaft (14) which passes through a duct (10) and is formed with a slot sized for receiving the butterfly valve (16), characterized in that, after the shaft (14) has been indexed so that the slot is parallel to the axis of the duct (10),
- an edge of the butterfly valve is clamped with a gripping member (20) and the gripping member (20) is moved along a path for radial insertion of the butterfly valve (16) in the slot as far as its final position with respect to the shaft (14), and
- the unit formed by the butterfly valve (16) and the shaft (14) is rotated to a position in which the butterfly valve closes the duct, by simultaneously controlling a motor driving the shaft and applying an abutment force with the gripping member on said edge so as to create friction forces preventing the butterfly valve (16) from sliding in the slot of the shaft (14) during rotation of the shaft (14) to the closure position of the butterfly valve (16).

2. Method according to claim 1, characterized in that a biasing force is exerted with the help of the gripping member and a resistive torque is exerted with the help of the motor (28).

3. Method according to claim 1, characterized in that the butterfly valve is clamped between an extension (24) of said gripping member (20) and retractable means (26).

4. Method according to claim 1, 2 or 3, characterized in that the butterfly valve is clamped with the gripping member (20) by exerting a depression.

5. Method according to any one of the preceding claims, characterized in that the slot is indexed in a plane extending through the axis of the duct during is preliminary step.

6. Method according to claim 5, characterized in that the shaft (14) is indexed by rotation until the light flux transmitted through the slot from a light source (40) to a receiver (42) aligned with the source along the duct axis is maximum.
